# EUROPEAN PATENT SPECIFICATION

(11) **EP 2 103 475 B1**
(45) Date of publication and mention of the grant of the patent: **04.01.2012**
(21) Application number: 08425169.3
(22) Date of filing: 18.03.2008
(51) Int. Cl.: B60K 31/04, F16H 59/20

(54) **Operating method of an electronic system of an automated stage-geared gearbox in presence of cruise control and electronic gearbox system**
Verfahren zum Betrieb eines elektronischen Systems eines mehrstufigen Automatikgetriebes bei Vorhandensein eines Geschwindigkeitsreglers und elektronisches Getriebesystem
Procédé de fonctionnement d'un système électronique de boîte de vitesses à étagement en présence du système de boîte de vitesses électronique et de régulateur de vitesse

(43) Date of publication of application: 23.09.2009
(73) Proprietor: IVECO S.p.A., 10156 Torino (IT)
(72) Inventor: Sirianni, Giuseppe, 10036 Settimo Torinese (IT)
(74) Representative: Cinquantini, Bruno

(56) References cited:
- FR-A- 2 898 834
- US-A- 5 772 556
- US-A1- 2002 138 190

## Description

### FIELD OF THE INVENTION

The present invention relates to an operating method of an automated gearbox in a vehicle provided with cruise control (CC).

### DESCRIPTION OF THE PRIOR ART

In the field of the vehicles, in particular vans, campers or industrial vehicles the automated stage-geared gearbox systems are more and more widespread. In these systems a series of actuator organs, among which organs for the opening and the closing of the clutch and for the shifting of the gear, are controlled by an electronic control system, which is able to control the gear shifting according to the needs detected by measuring some operating parameters of the engine. This kind of gearbox, compared to the traditional automated gearboxes, has an easier construction and a better efficiency. Usually these systems allow both an automatic and a manual functioning, therefore the gears are selected by the driver by means of an appropriate command.

Another device that has become widespread in the field of the industrial vehicle is known as "cruise control". This device, activated by a driver's request, controls the supply to the engine, in order to keep constant the speed of the vehicle, without the driver having to operate on the accelerator pedal. This is particularly comfortable in some situation, such as when travelling for a long time on highways, which is a typical use of this type of vehicle. Generally the speed that the device has to keep constant may be set by the driver; for example, the speed is automatically set to be equal to the speed value of the vehicle at the time of the cruise control activation request, unless the driver changes it into a higher of lower value, by means of appropriate controls.

The Italian patent application MI2004A002383 describes a cruise control system applicable to an automated stage-geared gearbox. Unlike the previous systems, the gear shifting, in particular if carried out by the automated gearbox system, does not cause the deactivation of the cruise control, expanding the functionality of both systems, and avoiding the driver having to set the cruise control again. Another example of cruise control system is given in US2002138190, whom features are disclosed in the preamble of claim 1.

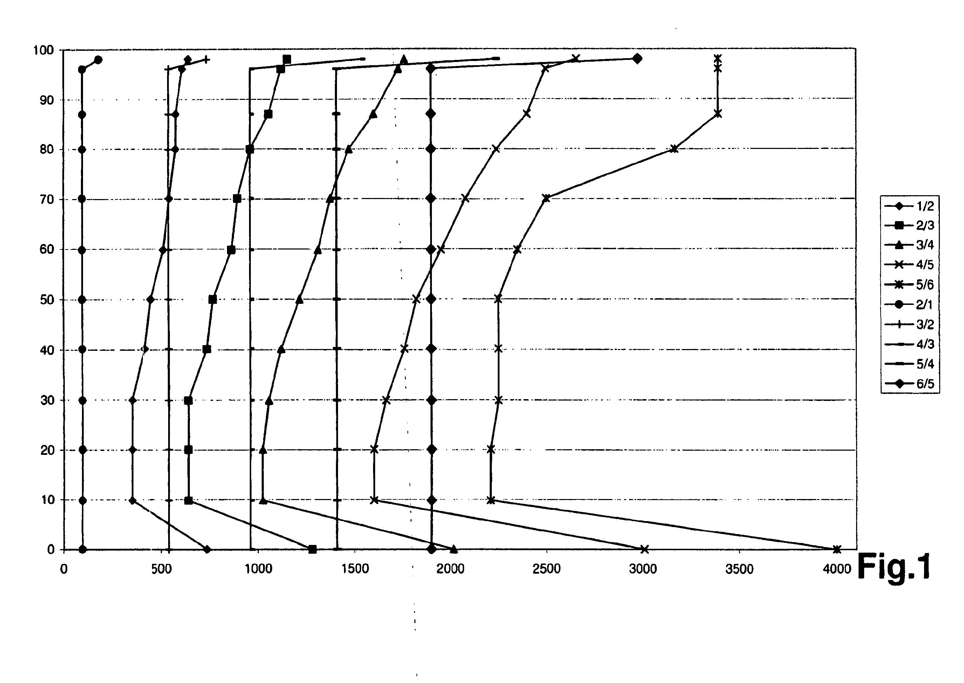

The automated gearbox operates according to a shifting map which considers the speed and the position of the accelerator pedal. The shifting map is studied in a suitable way; an example of shifting map suitable for a van is shown in figure 1 where on the abscissa axis there is the revolution speed of the engine (r.p.m.) and on the ordinate axis there is the stroke percentage of the accelerator (0 corresponds to the foot raised, 100 to the pedal fully pressed); the curves correspond to the operating r.p.m. at which the automated gearbox system carries out the indicated gear shifting. In the case shown, the upshifting is carried out at a speed that allows to obtain the acceleration or the torque requested by the driver according to the pressure on the pedal, starting from a low gear to the one allowing the highest acceleration or torque possible. The downshifting is carried out at a speed optimized above all for the efficiency, and at a determined r.p.m. value which is independent from the pressure on the pedal, except for the case wherein the pedal is fully pressed (≥98% of its stroke), which corresponds to a driver's request of the highest power possible, for example during an overtaking.

In the case described above, wherein the accelerator pedal is not pressed because of the presence of the cruise control, the system can calculate a virtual position of the accelerator, according to the speed and the torque requested (or any correlated parameter, such as the fuel supply to the engine). In case a change of speed is requested, for example by means of a driver's pressure on the brake or on the accelerator pedal, the cruise control may be automatically deactivated; after that the automated gearbox will function according to the real data about the stroke of the accelerator pedal, adapting the functioning of the engine to the driver's request. The cruise control has to be reactivated as seen above, if needed.

In certain conditions, such as for example during the overtaking of a slower vehicle, especially uphill, a sudden and fast acceleration may be requested, followed by the restoration of the previous travelling conditions, at the end of the overtaking or at the end of the conditions which determined a higher torque request. It has been noticed that the deactivation of the cruise control may be difficult in this situation, because it would need to be immediately reset. On the other hand, the cruise control, keeping constant the vehicle's speed, would not allow a fast overtaking.

Therefore, the functioning of the type known of this device is still not completely satisfying, in terms of driving comfort.

### SUMMARY OF THE INVENTION

The problems explained above have been solved by an operating method of an automated stage-geared gearbox for motor vehicle, according to claim 1.

According to a preferred embodiment of the invention, said specific command is the pressure on the accelerator pedal exceeding a certain threshold, for example a full pressure on the pedal (that is a pressure of at least 98% of the stroke). The torque value determined by the driver may correspond to the same stroke of the accelerator pedal.

The invention relates also to an automated stage-geared gearbox for vehicle, comprising a cruise control system, suitable for functioning according to the method explained above.

This invention refers in particular to what mentioned in the claims attached hereto.

### LIST OF THE FIGURES

The present invention will be now illustrated through a detailed description of preferred but non exclusive embodiments, furnished merely by way of example, with the aid of figure 1 attached hereto which shows a diagram of a shifting map for the automated stage-geared gearbox, which can be used for the functioning according to the method of the present invention.

### DETAILED DESCRIPTION OF AN EMBODIMENT OF THE INVENTION

Figure 1 shows a diagram of a shifting map used in the automated stage-geared gearboxes; these maps may be, for example, stored in the operative system software of the electronic control system of the gearbox. On the abscissa axis there is the revolution speed of the engine (r.p.m.) and on the ordinate axis there is the stroke percentage of the accelerator (0 corresponds to the foot raised, 100 to the pedal fully pressed); the curves correspond to the operating r.p.m. at which the automated gearbox system carries out the indicated gear shifting. The label in the figure shows the shifting to be made for each curve: the first number corresponds to the gear engaged, the second to the gear to be engaged. As noticed above, the point in which the shifting has to be carried out is considerably dependent on the pedal stroke, especially for the upshiftings, or when the pedal is pressed to a high stroke, which corresponds to a high power request. The map shown is suitable for the operating method according to the present invention. However, this map is merely illustrative and other maps, also different from this, may be developed according to the needs, as well as maps based on different parameters or based on a higher number of parameters.

When the cruise control is activated, during its normal operating conditions, the accelerator pedal is fully released by the driver. Therefore, the work of the gearbox control system has to be based on a torque request value that may be calculated by the cruise control itself, since it has the task to regulate the fuel supply to the engine, in order to control the speed of the vehicle. This torque value may be associated to a virtual value of the stroke of the accelerator pedal, that the automated gearbox system may use according to the map it usually uses. The value associated to the torque (or power) requested, may be advantageously transmitted by the cruise control to the gearbox control system, for example by means of a common data transmission line of the vehicle. The functioning described so far may be carried out in the way known in the art, for example according to the Italian patent application MI2004A002383.

According to a preferred embodiment of the present invention, a specific command, for example a full pressure on the accelerator pedal, that is a pressure higher or equal to 98% of the stroke, causes the gearbox system to operate according to the predetermined map used when the cruise control is deactivated, therefore according to the real position of the pedal and not to the value determined by the cruise control, without the need to permanently deactivate it. This means that when the specific command stops operating, for example when the pedal is fully released, the gearbox system operates again according to the value determined by the cruise control.

The advantages of the operating method described above are evident, for example in case of an overtaking to be effectuated in a short time, or when there is the need of a sudden acceleration or of a higher torque on an uphill road, when the cruise control response may be too slow to bring the vehicle up to the speed needed.

It should be noted that, according to the map given as example, and according to a preferred embodiment of the invention, as a consequence of a pressure of the pedal exceeding the threshold defined above, there are some conditions wherein the upshifting, and in particular the downshifting, are carried out for a rotational speed higher than in other positions of the accelerator, and the engine delivers more power. This happens preferably for at least one shifting, more preferable for any downshifting, even more preferable for any shifting. For example, the map may be such that, for any r.p.m. the maximum acceleration possible of the vehicle is guaranteed, in correspondence of a specific command of the driver. It should be noted that if the accelerator is pressed when the vehicle travels at a constant speed, it is very likely that the gearbox system downshifts, as it normally does when a sudden acceleration is needed. As already said, when the specific command stops operating, for example when the pedal is fully released, the cruise control starts to function again, making the vehicle travel to the predetermined speed, and sending to the gearbox system the data for its proper functioning. According to a possible embodiment of the invention, it is possible to include some conditions which determine the automatic deactivation of the cruise control, as already happens in the prior art. Among these condition there may be a pressure on the brake pedal or a pressure on the accelerator pedal, such that it cannot be interpreted as the specific command described above, for example a pressure that makes the pedal go half of his stroke. In this case the torque request is controlled again by the driver by means of the accelerator pedal and the cruise control has to be reset, if needed.

In case the specific command is a pressure on the accelerator exceeding a certain threshold, it is necessary to determine the modality with which it has to be carried out, in order to avoid incorrect interpretations by the system. For example, the passage from the position fully released to that with a pressure exceeding the predetermined threshold and vice versa, has to be carried out within a predetermined interval of time, as to avoid the system to interpret the intermediate positions as a deactivating condition. This and other managing method may be easily developed by the person skilled in the art.

When the specific command is operating, the shifting map may preferably be the same usually used by the gearbox, as seen above: however a different system may be developed.

It is evident that the pressure on the accelerator pedal as described above is the easiest and the most comfortable specific command for the driver, because it corresponds to his/her instinctive behaviour when more power is suddenly needed. However, other alternative types of control may be used, also by means of specific devices. In this case, the behaviour of the gearbox system may, of course, be determined according to systems different from the shifting map, which is function of the accelerator pedal.

The invention relates also to a vehicle provided with the gearbox system described above.

The invention relates also to a computer program able to carry out the method according to the present invention, if running on an electronic control system of an automated gearbox of a motor vehicle as described above.

The innovative part of the program described above may be included as an additional part or a modification of an existing program suitable to carry out the control functions already known in the art, for example those included in a known gearbox control system.

The person skilled in the art is able to write this program applying programming techniques known in the art, according to what described above.

## Claims

1. Operating method of an automated stage-geared gearbox for motor vehicle, comprising the detection by said system of a value representative of the torque requested to the engine, the gear selection according to at least said value, during the functioning of the cruise control, said value being determined by said cruise control, in the absence of a specific driver's command, **characterized in that** in presence of a specific driver's command said torque value is determined by the driver, without that said cruise control is deactivated, the specific driver's command being a pressure on the accelerator pedal equal or higher to a predetermined percentage of its stroke, and then a full release of the pedal restores the system's operation with the cruise control activated in absence of said specific command and **in that** a pressure on the accelerator pedal for a stroke lower that said predetermined percentage determines the deactivation of the cruise control.

2. Method according to claim 1 wherein said torque value is converted to a virtual value of the stroke of the accelerator pedal.

3. Method according to claim 1 wherein said percentage is 98%.

4. Method according to any claim from 1 to 3 , wherein the pressure on the accelerator pedal from released pedal to said percentage has to take place within a predetermined interval of time, in order to be interpreted as said specific command by the system.

5. Electronic automated stage-geared gearbox system for motor vehicle, comprising a cruise control suitable to be activated or deactivated by the driver, **characterized in that** it is configured to function according to any of the previous claim.

6. Computer program able to carry out the method according to the present invention, if run on an electronic control system of an automated stage-geared gearbox of a motor vehicle according to claim 5.

7. Vehicle provided with system according to claim 5.

## Patentansprüche

1. Betriebsverfahren eines automatisierten Stufengetriebes für ein Kraftfahrzeug, das die Detektion eines Wertes, der das für den Motor angeforderte Drehmoment repräsentiert, durch das System und die Gangauswahl gemäß zumindest dem Wert während der Funktion der Fahrtregelung umfasst, wobei der Wert bei Fehlen eines spezifischen Befehls des Fahrers durch die Fahrtregelung festgelegt wird,
**dadurch gekennzeichnet, dass** in Anwesenheit eines spezifischen Befehls des Fahrers der Drehmomentwert durch den Fahrer festgelegt wird, ohne dass die Fahrtregelung deaktiviert wird, wobei der spezifische Befehl des Fahrers einen Druck auf das Gaspedal gleich wie oder höher als ein vorbestimmter Prozentsatz seines Weges ist, und dann bei Fehlen des spezifischen Befehls ein vollständiges Lösen des Pedals den Betrieb des Systems mit der aktivierten Fahrtregelung wiederherstellt, und dass ein Druck auf das Gaspedal über einen geringeren Weg als den vorbestimmten Prozentsatz die Deaktivierung der Fahrtregelung festlegt.

2. Verfahren nach Anspruch 1,
wobei der Drehmomentwert in einen virtuellen Wert des Weges des Gaspedals umgewandelt wird.

3. Verfahren nach Anspruch 1,
wobei der Prozentsatz 98 % beträgt.

4. Verfahren nach einem der Ansprüche 1 bis 3,
wobei der Druck auf das Gaspedal von dem gelösten Pedal zu dem Prozentsatz innerhalb eines vorbestimmten Zeitintervalls stattfinden muss, um von dem System als der spezifische Befehl interpretiert zu werden.

5. Elektronisches automatisiertes Stufengetriebesystem für ein Kraftfahrzeug, das eine Fahrtregelung umfasst, die von dem Fahrer aktiviert oder deaktiviert werden kann,
**dadurch gekennzeichnet, dass** es ausgestaltet ist, um gemäß einem der vorhergehenden Ansprüche zu arbeiten.

6. Computerprogramm, das in der Lage ist, das Verfahren gemäß der vorliegenden Erfindung auszuführen, wenn es auf einem elektronischen Steuersystem eines automatisierten Stufengetriebes eines Kraftfahrzeugs nach Anspruch 5 laufen gelassen wird.

7. Fahrzeug, das mit dem System nach Anspruch 5 versehen ist.

## Revendications

1. Procédé de fonctionnement d'une boîte de vitesses automatique à étagement pour véhicule motorisé, comprenant la détection par ledit système d'une valeur représentative du couple requis au moteur, la sélection des vitesses selon au moins ladite valeur, pendant le fonctionnement du régulateur de vitesse, ladite valeur étant déterminée par ledit régulateur de vitesse, en l'absence d'un ordre spécifique du conducteur, **caractérisé en ce que**, en présence d'un ordre spécifique du conducteur, ladite valeur de couple est déterminée par le conducteur, sans que ledit régulateur de vitesse soit désactivé, l'ordre spécifique du conducteur étant une pression sur la pédale d'accélérateur supérieure ou égale à un pourcentage prédéterminé de sa course, puis un relâchement total de la pédale rétablit le fonctionnement du système avec le régulateur de vitesse activé en l'absence dudit ordre spécifique et **en ce qu'**une pression sur la pédale d'accélérateur pour une course plus courte que ledit pourcentage prédéterminé détermine la désactivation du régulateur de vitesse.

2. Procédé selon la revendication 1 dans lequel ladite valeur de couple est convertie en une valeur virtuelle de la course de la pédale d'accélérateur.

3. Procédé selon la revendication 1, dans lequel ledit pourcentage est 98 %.

4. Procédé selon l'une quelconque des revendications 1 à 3, dans lequel la pression sur la pédale d'accélérateur entre la position relâchée de la pédale et ledit pourcentage doit avoir lieu dans un intervalle de temps prédéterminé, afin d'être interprétée comme ordre spécifique par le système.

5. Système de boîte de vitesses automatique électronique à étagement pour véhicule motorisé, comprenant un régulateur de vitesse adapté pour être activé ou désactivé par le conducteur, **caractérisé en ce qu'**il est configuré pour fonctionner selon l'une quelconque des revendications précédentes.

6. Programme informatique capable de réaliser le procédé selon la présente invention, s'il est exécuté sur un système de commande électronique d'une boîte de vitesses automatique à étagement d'un véhicule motorisé selon la revendication 5.

7. Véhicule équipé d'un système selon la revendication 5.
